(19) Europäisches Patentamt
European Patent Office
Office européen des brevets

(11) EP 4 074 671 A1

(12) EUROPEAN PATENT APPLICATION

(43) Date of publication:
**19.10.2022 Bulletin 2022/42**

(21) Application number: **21168776.9**

(22) Date of filing: **16.04.2021**

(51) International Patent Classification (IPC):
***C04B 26/14** (2006.01)* ***C08L 63/00** (2006.01)*

(52) Cooperative Patent Classification (CPC):
(C-Sets available)
**C04B 14/303; C04B 26/14; C08L 63/00;**
C04B 2111/00715 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
- **Martin-Lasanta, Ana-Maria**
**86899 Landsberg am Lech (DE)**
- **Behrens, Nicole**
**81245 München (DE)**

(74) Representative: **Hilti Aktiengesellschaft**
**Corporate Intellectual Property**
**Feldkircherstrasse 100**
**Postfach 333**
**9494 Schaan (LI)**

# (54) MULTI-COMPONENT EPOXY RESIN MATERIAL WITH FINE FILLERS

(57) The present invention relates to a multi-component epoxy resin material, comprising: an epoxy resin component (A) comprising at least one hardenable epoxy resin, and a hardener component (B) comprising a hardening agent for the epoxy resin of component (A), wherein the multi-component epoxy resin material further comprises at least one filler in a total amount of 55 wt.-% or less, based on the total weight of the multi-component epoxy resin material, and wherein at least 75 wt.-% of the filler, based on the total weight of filler in the multi-component epoxy resin material, are composed of at least one filler (F) having a median particle size $d_{50}$ of 15 μm or less. The present invention further relates to the use of the multi-component epoxy resin material for fixing anchoring elements in a hole or crevice in a building substrate, as well as to a method of fixing an anchoring element in a hole or crevice in a building substrate, comprising introducing the multi-component epoxy resin material and an anchoring element into the hole or crevice, and allowing the multi-component epoxy resin material to cure.

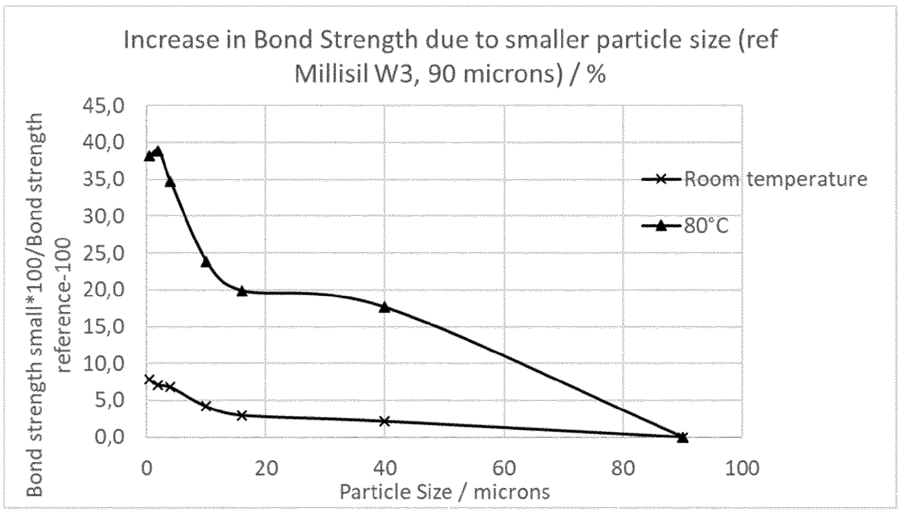


EP 4 074 671 A1

(52) Cooperative Patent Classification (CPC): (Cont.)

C-Sets
**C04B 14/303, C04B 20/1051;**
**C04B 26/14, C04B 14/04, C04B 20/008, C04B 40/0666;**
**C04B 26/14, C04B 14/06, C04B 20/008, C04B 40/0666;**
**C04B 26/14, C04B 14/303, C04B 20/008, C04B 40/0666;**
**C08L 63/00, C08K 3/34;**
**C08L 63/00, C08K 3/346;**
**C08L 63/00, C08K 3/36**

## Description

The present invention relates to a multi-component epoxy resin material, comprising: an epoxy resin component (A) comprising at least one hardenable epoxy resin, and a hardener component (B) comprising a hardening agent for the epoxy resin of component (A), wherein the multi-component epoxy resin material further comprises at least one filler in a total amount of 55 wt.-% or less, based on the total weight of the multi-component epoxy resin material, and wherein at least 75 wt.-% of the filler, based on the total weight of filler in the multi-component epoxy resin material, are composed of at least one filler (F) having a median particle size $d_{50}$ of 15 $\mu$m or less. The present invention further relates to the use of the multi-component epoxy resin material for fixing anchoring elements in a hole or crevice in a building substrate, as well as to a method of fixing an anchoring element in a hole or crevice in a building substrate, comprising introducing the multi-component epoxy resin material and an anchoring element into the hole or crevice, and allowing the multi-component epoxy resin material to cure.

## Background

In the construction industry, aggregates in the form of particulate fillers are known for use in polymer-forming chemical anchoring mortars (sometimes also referred to as *"chemical dowels"*) with one or more components, for example in the form of two-chamber cartridges or two-chamber cartridges, for fixing anchoring elements in boreholes. Often, not much importance is attached to the nature of the fillers, unless they are those which, like cement, themselves contribute to the consolidation, for example by hydraulic setting.

US 2016/083563 describes the use of fine filler particles having a median particle size $d_{50}$ of 50 $\mu$m or less in chemical anchors to provide an increase in the bonding strength compared to fillers of larger particle size. All the information provided in US 2016/083563 and the examples thereof refers to room temperature.

On the other hand, it is known that temperature affects the performance of chemical anchoring mortars, as for example described in R. A. Cook, R. C. Konz, "Factors Influencing Bond Strength of Adhesive Anchors", ACI Structural Journal 2001, 98, 76-86, or in M. Lahouar, , J.-F. Caron, N. Pinoteau, G. Forêt, K. Benzarti, "Mechanical behavior of adhesive anchors under high temperature exposure: experimental investigation", International Journal of Adhesion and Adhesives 2017, 78, 200-211. It is also known that a temperature increase has the effect of weakening the bond, i.e. the binder system, and leads to a significant decay in the bearing capacity of the chemical anchors.

In view of the above, there is a need in the art for chemical mortars with a lower sensitivity to temperature, i.e. that do not weaken so strongly at elevated temperatures. That is to say, it is an object of the present invention to provide chemical mortars showing a minimum difference in bond strength between room temperature and elevated temperatures like 80°C.

## Summary of the invention

The above object underlying the present invention solved by a multi-component epoxy resin material, comprising:

> an epoxy resin component (A) comprising at least one hardenable epoxy resin, and
> a hardener component (B) comprising a hardening agent for the epoxy resin of component (A),
> wherein the multi-component epoxy resin material further comprises at least one filler selected from oxides of silicon and aluminium, or mixed oxides in the presence of further cations, wherein the total amount of filler in the multi-component epoxy resin material is 55 wt.-% or less, based on the total weight of the multi-component epoxy resin material, and
> wherein at least 75 wt.-% of the filler, based on the total weight of filler in the multi-component epoxy resin material, are composed of at least one filler (F) having a median particle size $d_{50}$ of 15 $\mu$m or less.

The present invention also relates to the use of the multi-component epoxy resin material as defined above for fixing anchoring elements in a hole or crevice in a building substrate.

In another embodiment, the present invention relates to a method of fixing an anchoring element in a hole or crevice in a building substrate, comprising introducing the multi-component epoxy resin material as defined above and an anchoring element into the hole or crevice, and allowing the multi-component epoxy resin material to cure.

Further embodiments of the present invention are described in the following detailed description and the appended claims.

## Brief Description of the Figures

The Figure shows a comparison of the effect attributable to smaller filler particle size at room temperature versus elevated temperature (80°C).

## Detailed Description of the Invention

As outlined above, the present invention provides a multi-component epoxy resin material, comprising:

an epoxy resin component (A) comprising at least one hardenable epoxy resin, and
a hardener component (B) comprising a hardening agent for the epoxy resin of component (A),
wherein the multi-component epoxy resin material further comprises at least one filler selected from oxides of silicon and aluminium, or mixed oxides in the presence of further cations, wherein the total amount of filler in the multi-component epoxy resin material is 55 wt.-% or less, based on the total weight of the multi-component epoxy resin material, and
wherein at least 75 wt.-% of the filler, based on the total weight of filler in the multi-component epoxy resin material, are composed of at least one filler (F) having a median particle size $d_{50}$ of 15 μm or less.

It has been surprisingly found by the present inventors that the bond strength deceasing effect of elevated temperatures is significantly reduced when a filler (F) having a median particle size $d_{50}$ of 15 μm or less is employed, provided that significant portions of the total amount of filler (i.e. at least 75 wt.-% of the total weight of filler in the multi-component epoxy resin material) are composed of filler (F) having a median particle size $d_{50}$ of 15 μm or less. Thus, the multi-component epoxy resin material according to the present invention shows lower temperature sensitivity as regards the bonding strength obtained.

In the context of the present invention, the terms used herein and in the following description have the following meanings:

- *"aliphatic compounds"* are acyclic or cyclic, saturated or unsaturated carbon compounds, excluding aromatic compounds,

- *"cycloaliphatic compounds"* or "alicyclic compounds" are compounds having a carbocyclic ring structure, excluding benzene derivatives or other aromatic systems,

- *"aromatic compounds"* are compounds that follow the Hückel (4n+2) rule, and

- *"amines"* are compounds derived from ammonia by replacement of one, two or three hydrogen atoms by hydrocarbon groups and having the general structures $RNH_2$ (primary amines), $R_2NH$ (secondary amines) and $R_3N$ (tertiary amines) (see: IUPAC Compendium of Chemical Terminology, 2nd Ed. (the "Gold Book"), Compiled by A. D. McNaught and A. Wilkinson, Blackwell Scientific Publications, Oxford (1997)),

- "salts" are compounds composed of positively charged ions (cations) and negatively charged ions (anions). Ionic bonds are present between these ions. For example, the expression *"salts of nitric acid"* describes compounds that are derived from nitric acid ($HNO_3$) and include a nitrate ($NO_3^-$) as an anion. The expression *"salts of trifluoromethanesulfonic acid"* describes compounds derived from trifluoromethanesulfonic acid ($CF_3SO_3H$) and comprise as an anion a triflate ($CF_3SO_3^-$). The term salt in the sense of the present invention also includes the corresponding hydrates of the salts. The salts(s) which are used as accelerators are also referred to as salts in the sense of the present invention,

- the terms *"a"* or *"an"* as articles preceding a chemical compound class mean that one or more compounds falling under that chemical compound class may be meant. In a preferred embodiment, these articles mean only a single compound,

- the term *"at least one"* means numerically *"one or more"*. In a preferred embodiment, the term numerically means *"one"*,

- the terms *"include"* and "comprising" mean that there may be other components in addition to those mentioned. These terms are meant inclusively and therefore include *"consisting of'*. *"Consisting of"* is meant conclusively and means that no further constituents may be present. In an embodiment, the terms *"comprise"* or *"comprising"* mean

*"consisting of",*

- a range delimited by numbers, e.g. *"from 80°C to 120°C"* means that the two corner values and each value within that range are individually disclosed.

As stated above, the present invention relates in one embodiment to a multi-component epoxy resin material. "Multi-component" systems in the sense of the present invention contain several components stored separately from each other, so that curing of the ingredients contained in the components occurs only after all the components have been mixed together. In particular, the multi-component epoxy resin material according to the invention contains at least one component (A) comprising at least one hardenable epoxy resin, and at least one further component (B) comprising a hardening agent for the epoxy resin of component (A). In a preferred embodiment, the multi-component material according to the invention is a two-component system. Thus, in one embodiment, the present invention relates to a multi-component epoxy resin material as defined above in the form of a two-component system consisting of components (A) and (B).

Filler

The multi-component epoxy resin material according to the present invention comprises filler in a total amount of 55 wt.-% or less, such as 5 to 55 wt.-%, based on the total weight of the multi-component epoxy resin material. In a preferred embodiment, the total amount of filler in the multi-component epoxy resin material is 20 to 40 wt.-%, more preferably 25 to 35 wt.-%, based on the total weight of the multi-component epoxy resin material.

The filler may be comprised in component (A) and/or component (B), and preferably is comprised in both component (A) and component (B).

The filler is in principle known in the art and may be selected from oxides of silicon and aluminum, or mixed oxides in the presence of further cations. Oxides of silicon or aluminum are primarily silicon dioxide ($SiO_2$) or aluminum oxide ($Al_2O_3$). Mixed oxides, if present, are primarily oxides of silicon and aluminum in the additional presence of one or more oxides selected from oxides of the group of metals consisting particularly of calcium, titanium, iron, sodium or the like. In a preferred embodiment, the filler is selected from quartz, silicates, or alumina, in particular $\alpha$-alumina. Such fillers are commercially available.

Fine Filler (F)

According to the present invention, major portions of the filler comprised in the multi-component epoxy resin material is composed of at least one fine filler (F) having a median particle size $d_{50}$ of 15 $\mu$m or less. That is to say, at least 75 wt.-% of the filler, based on the total weight of filler in the multi-component epoxy resin material, are composed of filler (F) having a median particle size $d_{50}$ of 15 $\mu$m or less. In an embodiment, at least 90 wt.-% of the filler present in the multi-component epoxy resin material are composed of filler (F) having a median particle size $d_{50}$ of 15 $\mu$m or less. In another embodiment, all of the filler present in the multi-component epoxy resin material, i.e. 100 wt.-%, are composed of filler (F) having a median particle size $d_{50}$ of 15 $\mu$m or less.

The fine filler (F) is selected in accordance with the general principles outlined above in connection with conventional fillers. That is to say, the fine filler (F) is selected from oxides of silicon and aluminum, or mixed oxides in the presence of further cations. Oxides of silicon or aluminum are primarily silicon dioxide ($SiO_2$) or aluminum oxide ($Al_2O_3$). Mixed oxides, if present, are primarily oxides of silicon and aluminum in the additional presence of one or more oxides selected from oxides of the group of metals consisting particularly of calcium, titanium, iron, sodium or the like. In preferred embodiments, the fine filler (F) is selected from quartz, silicates, or alumina, in particular $\alpha$-alumina. Such fine fillers (F) of suitable median particle size dso are commercially available as outlined in more detail in the examples section below.

Like in case of the general filler described above, the fine filler (F) also may be comprised in component (A) and/or component (B), and preferably is comprised in both component (A) and component (B).

The filler (F) having a median particle size $d_{50}$ of 15 $\mu$m or less may optionally be functionalized. For example, the filler (F) may be modified, i.e. surface modified, with a silane (S') containing at least one Si-bonded hydrolyzable group. Suitable silanes (S') for surface modification include but are not limited to, for example, 3-(meth)acryloyl-oxypropyltrialkoxysilane, 3-(meth)acryloyl-oxymethyltrialkoxysilane, 3-(meth)acryloyl-oxypropylmethyldialkoxysilane, 3-glycidyloxypropyltrialkoxysilane, glycidyloxymethyltrialkoxysilane, 3-glycidyloxypropylmethyldi-alkoxysilane, 2-(3,4-epoxycyclohexyl)ethyltrimethoxysilane, N-2-(aminoethyl)-3-aminopropylmethyldiethoxysilane, N-2-(aminoethyl)-3-aminopropyltriethoxysilane, 3-aminopropyl-trialkoxysilane, N-phenyl-3-aminoethyl-3-aminopropyl-trialkoxysilane, 2-aminoethyl-3-aminopropyl-trialkoxysilane, bis-(3-trialkoxysilylpropyl)amine, 3-mercaptopropyltrialkoxysilane, 3-mercaptopropylmethyldialkoxysilane, alkenylalkoxysilane, trialkoxysilylpropyldiethylenetetramine and/or tetraalkoxysilane, or a mixture of two or more thereof.

Preferred silanes (S') are those having reactive groups, such as epoxide groups or amino groups, and hydrolyzable groups bonded to Si, such as alkoxy (e.g. with 1 to 7 carbon atoms, such as methoxy or ethoxy) or halogeno, such as chloro. In a preferred embodiment, the silane (S) is selected from 3-glycidyloxypropyltrialkoxysilane, such as 3-glycidyloxypropyltrimethoxysilane (GLYMO) or -ethoxysilane, Glycidyloxymethyltrialkoxysilane, such as glycidyloxymethyltrimethoxysilane or glycidyloxymethyltriethoxysilane, 3-glycidyloxypropylmethyldi-alkoxysilane, such as 3-glycidyloxypropylmethyldi-methoxysilane or 3-glycidyloxypropylmethyldi-ethoxysilane, 2-(3,4-epoxycyclohexyl)ethyltrimethoxysilane, N-2-(aminoethyl)-3-aminopropylmethyldiethoxysilane, N-2-(aminoethyl)-3-aminopropyl-triethoxysilane, 3-aminopropyl-trialkoxysilane, such as 3-aminopropyl-trimethoxysilane (AMMO) or 3-aminopropyl-triethoxysilane (AMEO), N-phenyl-3-aminoethyl-3-aminopropyl-trialkoxysilane, such as N-phenyl-3-aminoethyl-3-aminopropyl-trimethoxysilane, 2-aminoethyl-3-aminopropyl-trialkoxysilane, such as 2-aminoethyl-3-aminopropyl-trimethoxysilane (DAMO), bis-(3-trialkoxysilylpropyl)amine, such as bis-(3-trimethoxysilylpropyl)amine or bis-(3-triethoxysilylpropyl)amine, trialkoxysilylpropyldiethylenetetramine, such as trimethoxysilylpropyldiethylenetetramine (TRIAMO) or triethoxysilylpropyldiethylenetetramine, and/or tetraalkoxysilane, such as tetramethoxysilane, tetraethoxysilane or tetrapropoxysilane, or a mixture of two or more thereof. Particularly preferred silanes (S) are, for example, 3-aminopropyl-triethoxysilane or 3-glycidyloxypropyltrimethoxysilane, e.g. Dynasylan GLYMO from Evonik Industries, Germany.

In a preferred embodiment, the at least one filler (F) has a median particle size $d_{50}$ of 10 $\mu$m or less, preferably 5 $\mu$m or less, more preferably 4 $\mu$m or less, such as e.g. 1 $\mu$m or less.

The fine filler (F) usually has a Mohs hardness of at least 3, preferably of at least 5, such as at least 6.

In the following, the further details of the multi-component system according to the invention are explained using a two-component system consisting of components (A) and (B) as an illustrative example.

Component (A)

Epoxy resin component (A) of the multi-component epoxy resin material according to the present invention typically comprises liquid and solid constituents. As a typically liquid component, at least one epoxy resin-based reactive synthetic resin (*"epoxy resin component (A)"*) is usually included. According to the invention, *"epoxy resin"* is understood to mean a compound or the combination of two or more compounds containing a reactive epoxy group, also called oxirane group. Such an epoxy group is shown below:

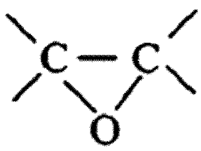

Suitable curable epoxy resins for use in component (A) of the present invention are a large number of commercially available compounds known to those skilled in the art, which contain on average more than one epoxide group, preferably two epoxide groups, per molecule. These epoxy resins can be both saturated and unsaturated and aliphatic, alicyclic, aromatic or heterocyclic and can also contain hydroxyl groups. They may further contain such substituents that do not cause interfering side reactions under the mixing or reaction conditions, for example, alkyl or aryl substituents, ether groups and the like. Within the scope of the invention, trimeric and tetrameric epoxides are also suitable.

Preferably, the epoxy resins are glycidyl ethers derived from polyhydric alcohols, particularly polyhydric phenols such as bisphenols and novolaks, especially those having an average glycidyl group functionality of 1.5 or greater, especially 2 or greater, for example from 2 to 10.

The epoxy resins may have an epoxy equivalent weight (EEW) of from 120 to 2000 g/EQ, preferably from 140 to 400. Mixtures of several epoxy resins can also be used.

Examples of polyhydric phenols used to prepare epoxy resins include resorcinol, hydroquinone, 2,2-bis(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane, and 4,4'-dihydroxy-3,3'-dimethyldiphenylpropane. Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of $MW \leq 2000$ g/mol. Liquid diglycidyl ethers based on bisphenol A and/or F with an EEW of 150 to 300 g/EQ are preferred.

The EEW (epoxide equivalent weight) values are usually indicated on the starting materials by the manufacturers or they are determined or calculated according to known methods. They indicate the amount in g of resin containing 1 mole of epoxy groups: EEW = MW / functionality.

The proportion of epoxy resin in the epoxy resin component (A) is >0 to 70% by weight, preferably 10 to 65%

by weight and particularly preferably 30 to 60% by weight, based on the total weight of the epoxy resin component (A).

According to the invention, reactive diluents, such as glycidyl ethers of aliphatic, alicyclic or aromatic mono- or in particular polyalcohols, which have a lower viscosity than epoxides containing aromatic groups, can be used as a further liquid component. Examples of reactive diluents are monoglycidyl ethers, e.g. o-cresyl glycidyl ethers, and glycidyl ethers with an epoxide functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylol ethane triglycidyl ether (TMETGE), with trimethylol ethane triglycidyl ether being preferred. Mixtures of two or more of these reactive diluents can also be used, preferably mixtures containing triglycidyl ether, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

Overall, the reactive diluents are preferably present in an amount of >0 to 60% by weight, in particular of 1 to 20% by weight, based on the total weight of the epoxy resin component (A).

The proportion of epoxy resin component (A) in the total weight of the multicomponent epoxy resin system is preferably from 5 to 90% by weight, in particular from 20 to 80% by weight or from 30 to 70% by weight, such as from 40 to 70% by weight.

Suitable epoxy resins and reactive thinners can also be found in the standard work by Michael Dornbusch, Ulrich Christ and Rob Rasing, "Epoxy Resins," Vincentz Network GmbH & Co KG (2015), ISBN 13: 9783866308770. These compounds are incorporated herein by reference.

Usual solid constituents include in particular fillers as outlined above or thixotropic agents (thickeners). In one embodiment, epoxy resin component (A) of the multi-component epoxy resin material according to the present invention comprises the above fine filler (F) having a median particle size $d_{50}$ of 15 $\mu$m or less in an amount of 20 to 40 wt.-%, based on the total weight of component (A), preferably in an amount of 25 to 35 wt.-%.

Further conceivable additives to the epoxy resin component (A) are thixotropic agents, such as optionally organically post-treated fumed silica, bentonites, alkyl and methyl celluloses and rhizinus oil derivatives, plasticizers such as phthalic or sebacic esters, stabilizers, antistatic agents, thickeners, flexibilizers, curing catalysts, rheological aids, wetting agents, coloring additives such as dyes or pigments, for example for different coloring of the components for better control of their mixing, as well as wetting agents, phlegmatizers, dispersants and other reaction rate control agents, or mixtures of two or more thereof.

<u>Component (B)</u>

Component (B) of the multi- epoxy resin material comprises at least one hardener (*"hardener component (B)"*). The hardener comprises at least one compound commonly used for epoxy curing (reaction partner in polyaddition). In this context, the term *"hardener"* preferably means at least one compound customary for epoxy curing with or without added fillers and/or further additives, such as water, thickeners and/or further additives, in other words, the complete hardener component. Common additives may be added, such as fillers, as already described above in connection with component (A). The other additives of the hardener component of an epoxy-based luting mortar system according to the invention can be provided, for example, in a weight proportion totalling 0.01 to 70% by weight, e.g. 1 to 40% by weight, based on the hardener component (B).

In an embodiment, component (B) in the multi-component epoxy resin material according to the invention comprises filler (F) having a median particle size $d_{50}$ of 15 $\mu$m or less in an amount of at least at least 25 wt.-%, based on the total weight of component (B), preferably at least 37 wt.-%, more preferably at least 40 wt.-%, such as 40 to 55 wt.-%.

The compounds commonly used for epoxy curing (acting as reactants in polyaddition) are in particular those having two or more groups selected from amino, imino, and mercapto, for example corresponding amines, thiols, or aminothiols, or mixtures thereof, for example as mentioned in Lee H and Neville K, "Handbook of Epoxy Resins" (New. York: McGraw-Hill), 1982.

According to the invention, one or more amines, preferably polyamines, may be used as reactive hardener components. Suitable amines for use in the curing agent are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl)cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin C260), 2,2-bis(4-aminocyclohexyl)propane.

Polyamines preferred according to the invention are 2-methylpentanediamine (DYTEK A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(aminomethyl)tricyclopentadiene, 1,8-diamino-p-menthane, bis-(4-amino-3, 5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine.

The one or more epoxy-reactive amines are preferably present in component (B) in an amount of 10 to 90 wt.-%, more preferably 35 to 60 wt.-%, based on the total weight of component (B).

In addition to one or more amines, component (B) according to the present invention may further contain a salt (S) as an accelerator. According to the invention, the salt (S) is at least one salt selected from the group consisting of salts of nitric acid, salts of nitrous acid, salts of halogens, salts of trifluoromethanesulfonic acid, and combinations thereof. Preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates ($NO_3^-$), iodides ($I^-$), triflates ($CF_3SO_3^-$), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as $Ca(NO_3)_2$ or $NaNO_3$. It is also possible to use as salt (S) a solution of a salt in nitric acid such as a solution containing $Ca(NO_3)_2/HNO_3$. To prepare this solution, $CaCO_3$ is dissolved in $HNO_3$.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as $Ca(NO_2)_2$.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as $Ca(CF_3SO_3)_2$. In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with $C_1$-$C_6$ alkyl radicals, can be considered.

Preferably, cations selected from the group consisting of alkali metals, alkaline earth metals, lanthanides, aluminum, ammonium ($NH_4^+$) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium and mixtures thereof.

The salt (S) may be included in component (B) in an amount of e.g. up to 12 wt.-%, such as up to 10 wt.-, preferably up to 8 wt.-%, based on the total weight of component (B).

Thus, the following compounds or components are particularly suitable as salt (S): $Ca(NO_3)_2$ (calcium nitrate, usually used as $Ca(NO_3)_2$ tetrahydrate), a mixture of $Ca(NO_3)_2/HNO_3$, $KNO_3$ (potassium nitrate), $NaNO_3$ (sodium nitrate),

$Mg(NO_3)_2$ (magnesium nitrate, usually used as $Mg(NO_3)_2$ hexahydrate), $Al(NO_3)_3$ (aluminum nitrate, usually used as $Al(NO_3)_3$ nonahydrate), $NH_4NO_3$ (ammonium nitrate), $Ca(NO_2)_2$ (calcium nitrite), NaCl (sodium chloride), NaBr (sodium bromide), NaI (sodium iodide), $Ca(CF_3SO_3)_2$ (calcium triflate), $Mg(CF_3SO_3)_2$ (magnesium triflate), $Li(CF_3SO_3)_2$ (lithium triflate).

Component (B) of the invention may comprise one or more salts (S). The salts may be used singly or in a mixture of two or more of the said salts.

To improve the solubility properties of the salt (S) in the hardener composition, it may be provided that the salt (S) is dissolved in a suitable solvent and used accordingly as a solution. Organic solvents such as methanol, ethanol and glycerol are suitable for this purpose. However, water can also be used as solvent, if necessary also in mixture with the aforementioned organic solvents. To prepare the corresponding salt solutions, the salt (S) is added to the solvent and stirred, preferably until completely dissolved.

In addition, component (B) according to the present invention may optionally include co-accelerators used in combination with the above salt (S).

Examples of suitable co-accelerators are in particular tris-2,4,6-dimethylaminomethylphenol, 2,4,6-tris(dimethylamino)phenol and bis[(dimethylamino)methyl]phenol. A suitable co-accelerator mixture contains 2,4,6-tris(dimethylaminomethyl)phenol and bis(dimethylaminomethyl)phenol. Mixtures of this kind are commercially available, for example as Ancamine® K54 (Evonik, Germany). These co-accelerators are preferably contained in component (B) in a weight proportion of from 0.001 to 5 wt.%, based on the total weight of the hardening component (B).

As an alternative, the co-accelerator can be a phenol derivative. The phenol derivative is preferably selected from the group consisting of polyphenols from the group of novolac resins, styrenated phenols, phenolic lipids and combinations thereof.
Compounds of the following formula (III) are preferably used as polyphenols from the group of novolac resins:

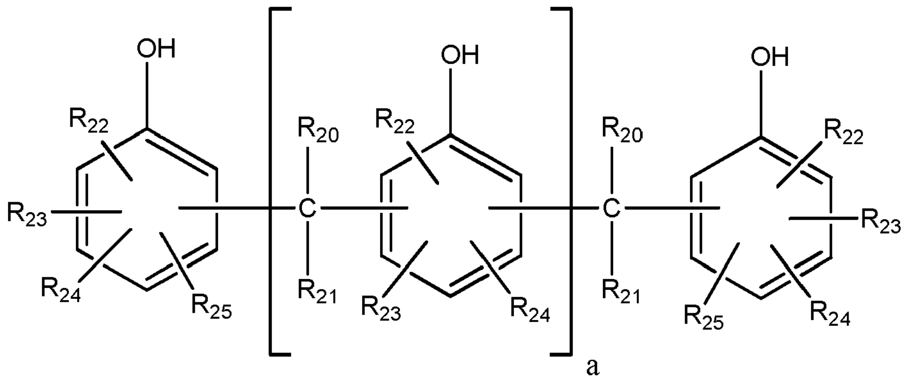

(III),

in which

$R_{20}$ and $R_{21}$ each denote, independently of one another, H or $-CH_3$;
$R_{22}$, $R_{23}$, $R_{24}$ and $R_{25}$ each denote, independently of one another, H, $-CH_3$ or an aliphatic functional group, preferably a linear, optionally partially unsaturated, unbranched hydrocarbon chain having up to 15 carbon atoms or an alkaryl functional group, preferably $-C_8H_9$; and where
a is 0 to 20, preferably 0 to 15.

The polyphenol from the group of novolac resins particularly preferably corresponds to the following formula (IV):

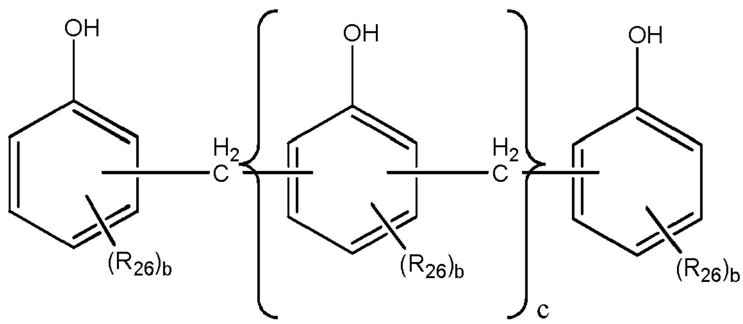

(IV)

in which

$R_{26}$ denotes a $C_1$-$C_{15}$ alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (IV), in which $R_{26}$ denotes $CH_3$ and b is 1 or 2, or $R_{26}$ denotes tert.-butyl or a $C_1$-$C_{15}$ alkyl group and b is 1, and where c is 0 to 15, preferably 1 to 15.

The term styrenated phenols is understood to mean the electrophilic substitution products of phenols such as phenol, pyrocatechol, resorcinol, hydroquinone, hydroxyhydroquinone, phloroglucinol, pyrogallol, o-cresol, m-cresol or p-cresol with styrene or styrene analogs, such as vinyltoluene, vinylpyridine or divinylbenzene, in particular styrene. The styrenated phenol is particularly preferably selected from the reaction products of styrene and phenol which contain mixtures of compounds or individual compounds of the following formulae:

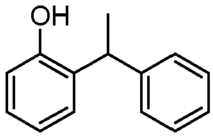 , 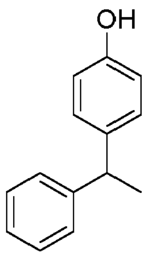 , 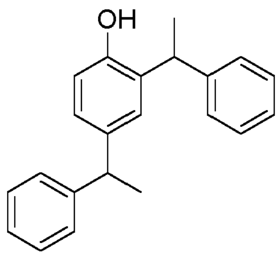 , 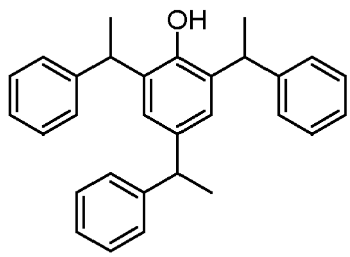

or 2,6-distyrylphenol, such as oligo- and polystyrene compound parts or compounds (products obtained from cationic polymerization of styrenes in phenols, oligomeric or polymeric products).

The term *"phenolic lipids"* is a collective term for a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The hardener component (B) according to the invention can comprise one or more phenol derivatives. The phenol derivatives can be used both individually and in a mixture of two or more of the specified phenol derivatives. The hardener component (B) according to the invention preferably contains the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins and is combined with a salt (S) selected from the group of nitrates. The weight percent ratio of all phenol derivatives, in particular the polyphenols from the group of novolac resins, to all salts (S) in the hardener component (B) according to the invention is preferably 250:1 to 1:4, more preferably 40:1 to 1:2.

Alternatively, according to the invention, Mannich bases can be used as hardening agent in component (B). Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, preferably phenol or a styrolized phenol, styrolized resorcinol or bisphenol A.

The selected amine for preparing the Mannich base has a structure according to formula (I):

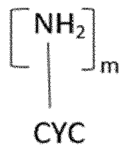 (I),

wherein

"CYC" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms and each of the two rings carrying at least one of the m $[NH_2]$

groups, or a3) a fused di- or polycyclic saturated ring system having 6 to 12 ring atoms and
m is a positive integer greater than or equal to 2.

The selected amine can also be used in the form of one of its salts. In these cases, one or both hydrogen atoms of the m amino groups [$-NH_2$] are replaced by alkali and/or alkaline earth metals. The use of corresponding salts of the selected amines makes it possible to adjust the solubility properties of the selected amine.

The selected amines for the preparation of the Mannich base are characterized by having at least two $NH_2$ groups directly bonded to different ring atoms. Preferably, the selected amines have exactly two $NH_2$ groups directly bonded to different ring atoms. Accordingly, in a preferred embodiment, m is equal to 2.

The definitions of "CYC" described in variants a1), a2) and a3) may optionally be methyl-or dimethyl-substituted per ring in each case.

The definitions of "CYC" described in variants a1), a2) and a3) preferably have an aliphatic structure, i.e. the rings and, if appropriate, the linkage of two rings consist only of carbon and hydrogen atoms. However, it is also possible that the rings according to variants a1), a2) and a3) have heteroatoms.

In these cases, the ring in variant a1) or the ring system in variants a2) and a3) may have 0 to 3 nitrogen atoms, 0 to 3 oxygen atoms and 0 to 1 sulphur atoms.

Preferably, the number of ring atoms of the definitions of "CYC" described in variants a1), a2) and a3) 10 is 6 to 9, particularly preferably 6.

Particularly preferably, the selected amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA) and methylcyclohexyldiamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-aminomethyl-3,5,5-trimethylcyclohexane (IPDA), 1,3-bis(aminomethyl)cyclohexane (1,3-BAC), bis(4-aminocyclohexyl)methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base can also be an aminosilane selected from the group consisting of 3-aminoalkyltrialkoxysilanes, such as 3-aminopropyltri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkylalkyldialkoxysilanes such as N-(2-aminoethyl)-3-aminopropylmethyldi(m)ethoxysilane, 3-[2-(2-aminoethylamino)ethylamino]propyltri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor can advantageously be added to the reaction mixture as an aqueous solution, in particular at an elevated temperature of about 50°C to 90°C, and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde can be used as the aldehyde precursor, which decompose to formaldehyde by heating in the presence of water.

Preferably, the selected amine is present in excess during the reaction with the phenolic compound and the aldehyde, so that the Mannich base has free amino groups.

In another embodiment, hardener component (B) according to the present invention may also comprise as the hardening agent mixtures of (i) styrenated phenols with (ii) amines. Amines usable in the mixture with styrenated phenols (which amines can be present as such or in salt form) include those mentioned above, especially N,N'-bis(3-amino-n-propyl)piperazine (BAPP), 1,3-bis(aminomethyl)cyclohexane (BAC), N-(2-aminoethyl)piperazine (AEP) or 3-aminomethyl-3,5,5-trimethylcyclohexylamine (isophoronediamine, IPDA), or other low molecular weight polyamines ("*polyamines"* also including diamines), especially oligomeric or monomeric aliphatic, cycloaliphatic, cycloheteroaliphatic, aromatic or araliphatic diamines, such as especially xylylenediamines, more especially m-xylylenediamine (1,3-bis(amino-methyl)benzene, MXDA); aliphatic polyamines, for example $C_1$-$C_{10}$alkane-di- or -poly-amines, e.g. 1,2-diaminoethane,

trimethylhexane-1,6-diamine, diethylenetriamine or triethylenetetraamine; oligomeric diamines of the formula $H_2N-(CH_2)_i-NH-[(CH_2)_jNH]_k-(CH_2)_l-NH_2$, wherein i, j and l are each independently of the others from 2 to 4 and k is 0, 1 or 2, especially *"triethylenetetramine"* (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more especially m-xylylenediamine, with one or more other polyamines, especially BAC, or more especially one or more araliphatic diamines, especially m-xylylenediamine itself, or mixtures of BAC and m-xylylenediamine.

Styrenated phenols in accordance with this embodiment are the reaction products (electrophilic substitution products) of phenols (such as phenol, pyrocatechol, resorcinol, hydroquinone, hydroxyhydroquinone, phloroglucinol, pyrogallol, o-cresol, m-cresol or p-cresol, especially phenol) with styrene or styrene analogues, such as vinyltoluene, divinylbenzene or 4-vinylpyridine, especially with styrene, especially *"styrenated phenol"* itself (reaction product of styrene and phenol; CAS Reg. No. 61788-44-1), which, by way of example, can contain mixtures of compounds or individual compounds of the following formulae:

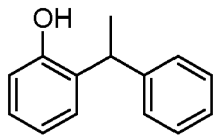 , 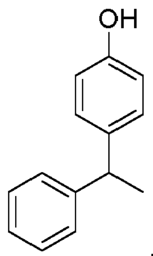 , 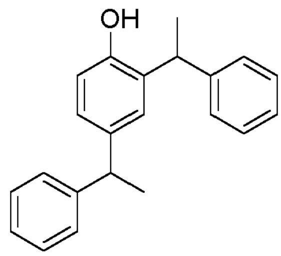 , 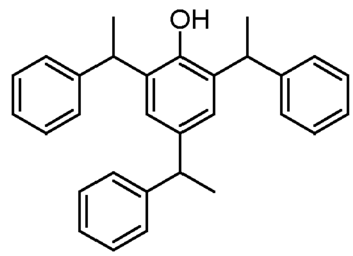

or 2,6-distyryl phenol, and also oligo- and poly-styrene portions or compounds (oligomeric or polymeric products obtained from cationic polymerisation of styrenes in phenols), for example of the formula

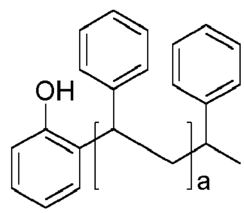

wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

Application and Use

By a multi-component epoxy resin material in the sense of the present invention is meant in particular a kit with two or more components (preferably a 2-component system) with component (A) containing one or more epoxy-based reactive synthetic resin, and hardener (component (B)), where further additives may be provided in one or both of the components, wherein the mutually reactive components (A) and (B) and optionally further separate components are contained in such a way that they cannot react with one another during storage, preferably in such a way that they do not come into contact with one another prior to use, which nevertheless makes it possible to mix and, if necessary, introduce the components (A) and (B) and, if necessary, further components for fixing at the desired location, for example directly in front of or in a hole or gap, in such a way that the curing reaction can take place there. Also suitable are cartridges, for example of plastic, ceramic or in particular glass, in which the components are arranged separated from one another by (for example when an anchoring element is driven into a hole or gap, such as a drilled hole) destructible boundary walls or integrated separate destructible containers, for example as nested cartridges, such as ampoules; as well as in particular multi-component or preferably two-component cartridges, in the chambers of which the preferably two components (in particular components (A) and (B)) of the luting mortar according to the invention are contained for storage prior to use, wherein preferably a static mixer can also be part of the corresponding kit. The use of a fixing mortar according to the invention at the desired place of use is then carried out by mixing the associated components.

Components (A) and (B) are preferably mixed in a ratio that gives a largely balanced stoichiometry according

to the EEW and AHEW values. For the intended use of the multi-component epoxy resin material, the epoxy resin component (A) and the hardener component (B) are emptied from the separate chambers and mixed in a suitable device, for example a static mixer or a dissolver. The mixture of epoxy resin component (A) and hardener component (B) is then introduced into the previously cleaned borehole by means of a known injection device. The component to be fixed is then inserted into the mortar mass and adjusted. The reactive components of the hardener component (B) react with the epoxy resins of the resin component (A) under polyaddition so that the epoxy resin compound cures within a desired time.

The multi-component epoxy resin material according to the invention is preferably used for construction purposes. The term *"for construction purposes"* means construction bonding of concrete/concrete, steel/concrete or steel/steel or one of the mentioned materials on other mineral materials, structural reinforcement of building elements made of concrete, masonry and other mineral materials, reinforcement applications with fiber-reinforced polymers of construction objects, chemical fastening on surfaces made of concrete, steel or other mineral materials, in particular the chemical fixing of structural elements and anchoring means, such as anchor rods, anchor bolts, (threaded) rods, (threaded) sleeves, concrete irons, screws and the like, in drilled holes in various substrates, such as (steel) concrete, masonry, other mineral materials, metals (e.g. steel), ceramics, plastics, glass and wood.

Preferably, the multi-component epoxy resin material described above are used for chemical fixing of anchoring elements in a hole or gap in a building substrate.

The invention further relates to a method for fixing an anchoring element in a hole or crevice in a building substrate, in which a multicomponent epoxy resin material, which as described above comprises in one component (A) reactive epoxy resin-based, and in a further component (B) comprises hardener, and an anchoring element are introduced into the hole or crevice and allowed to cure.

Further advantages of the invention will be apparent from the following description of preferred embodiments, which, however, are not to be understood as limiting in any way. All embodiments of the invention may be combined within the scope of the invention.

## Examples

All chemicals and ingredients of the compositions listed herein below are commercially available and have been used at commercial grade unless otherwise noted.

### Preparation of epoxy resin component (A)

In a plastic bucket, the liquid epoxy resins as given in the below tables (amounts in wt.-%) were mixed with a wood spatula. Then, the filler and thickener were added and by hand premixed before mixing it further into a dissolver (PC Laborsystem, volume 1 l) during 8.5 minutes under 80 mbar reduced pressure at 3500 rounds per minute (rpm).

The determination of the epoxy equivalent weight (EEW, i.e. the amount of resin in g containing 1 mole of epoxy groups) values in the examples below is carried out in a manner known to the skilled person on the basis of the formulation of the reaction mixture from the known H equivalents of the reactants and raw materials used, from which they are calculated. The EEW values are usually indicated on the starting materials by the manufacturers or they are determined or calculated according to known methods.

### Preparation of hardener component (B)

For the preparation of component (B), the specified amount of accelerator or accelerator mixture as indicated (in wt.-%) in the below tables was added in a plastic bucket and dissolved in the amine mixture. Then, the filler and thickener were added and premixed by hand before mixing it further into a dissolver (PC Laborsystem, volume 1 l) during 8.5 minutes under 80 mbar reduced pressure at 3500 rpm.

For the specific case in the below examples where inorganic accelerated hardeners are used, calcium nitrate was employed as a 80% solution in glycerine. For that, 400 g of $Ca(NO_3)_2$ tetrahydrate were added to 100 g of glycerine and stirred at 50°C until complete dissolution (about 3 hours).

For the specific case in the below examples where a novolac accelerator is used, novolac accelerator was previously dissolved in the amine mixture. For that, in a 2l jacketed double layer glass reactor equipped with a mechanical stirrer and a reflux condenser, the amine mixture and ancamine K54 were added at 23°C and stirred for 15 minutes. Then, while stirring, Phenolite TD-2131 was added in small portions and the temperature of the reaction increased to 30°C. After 1 h, the temperature was increased to 40°C and the mixture stirred for 3 h until the solid was completely dissolved. Then, the hardener was removed from the reactor and cooled to room temperature (RT) before use.

The AHEW (amine hydrogen equivalent weight, amount of resin containing 1 mol reactive H) is determined in a manner known to those skilled in the art on the basis of the formulation of the reaction mixture from the known H

equivalents of the reactants and raw materials used, from which they are calculated.

For a simple amine, the calculation of the AHEW is explained using meta-xylylenediamine (MW = 136 g/mol, functionality = 4 eq/mol) as a purely illustrative example:

$$AHEW = \frac{M_W}{Functionality} = \frac{136}{4}\left[\frac{g}{eq}\right] = 34\left[\frac{g}{eq}\right]$$

Mortars mixing and injection into a borehole

The components (A) and (B) as indicated in the below tables were mixed with a stoichiometry one to one based on their EEQ and AHEQ values using a speedmixer.

To determine the bond strength in concrete, pull out experiments under the R1 and B3 (80°C) conditions were made following the description given by the guideline ETAG 001 part 5 (Guideline For European Technical Approval Of Metal Anchors For Use In Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm embedment depth. After 24 h curing time at RT, the bond strength was determined in R1 pull-out tests. For the B3 (80°C) experiments, after 24 h curing time, the concrete blocks were put in an oven at 80°C for 48 h and the pull-out was performed after this time at 80°C.

Listing of Chemicals:

| **Function** | **Name** | **Supplier** |
|---|---|---|
| Epoxy resin | DGEBA - Araldite GY 240 | Hunstman Advanced Materials, Germany |
| Epoxy resin | DGEBF - Araldite GY 282 | Hunstman Advanced Materials, Germany |
| Reactive diluent | BDDGE - Araldite DY-026 | Hunstman Advanced Materials, Germany |
| Reactive diluent | TMPTGE - Araldite DY-T-CH | Hunstman Advanced Materials, Germany |
| Adhesion promoter | Glymo, (3-glycidyloxypropyl)trimethoxysilane | Evonik Resource Efficiency, Germany |
| Adhesion promoter | AMEO, 3-aminopropyltriethoxysilane | Evonik Resource Efficiency, Germany |
| Filler | Millisil W3, Quartz flour, dso = 40 μm | Quarzwerke, Germany |
| Filler | Millisil W6, Quartz flour, dso = 20 μm | Quarzwerke, Germany |
| Filler | Millisil W12, Quartz flour, dso = 16 μm | Quarzwerke, Germany |
| Filler | Sikron SF300, Quartz flour, dso = 10 μm | Quarzwerke, Germany |
| Filler | Sikron SF500, Quartz flour, dso = 4 μm | Quarzwerke, Germany |
| Filler | Sikron SF800, Quartz flour, dso = 2 μm | Quarzwerke, Germany |
| Filler | Silmikron 795-10/1, Quartz flour, $d_{50}$ = 0.5 μm | Quarzwerke, Germany |
| Filler | Silmikron 805-10/1, Quartz flour, $d_{50}$ = 0.5 μm | Quarzwerke, Germany |
| Filler | Silmikron 810-10/1, Quartz flour, $d_{50}$ = 0.5 μm | Quarzwerke, Germany |
| Filler | Silmikron 1171-850, dso = 0.3 μm | Quarzwerke, Germany |
| Filler | RG 4000, mono-modal α-alumina, $d_{50}$ = 0.6 μm | Almantis GmbH, Germany |
| Thickener | CabOSil TS 720 | Cabot corporation, Germany |
| Thickener | Aerosil R805 | Evonik Resource Efficiency, Germany |
| Amine | m-Xylylenediamine, mXDA | MGC, Japan |

(continued)

| Function | Name | Supplier |
|---|---|---|
| Amine | 2-methylpentane-1,5-diamine, Dytek A | Invista, Netherlands |
| Amine | Isophorondiamine, IPDA, vestamine IPD | Evonik Degussa, Germany |
| Amine | 1,3-Bis(aminomethyl)cyclohexane, BAC | Itochu, Germany |
| Accelerator | Ancamine K54, (tris-2,4,6-dimethylaminomethyl phenol) | Air products, Netherlands |
| Accelerator | Calcium Nitrate Tetrahydrate | Sigma Aldrich, Germany |
| Solvent | 1,2,3-propanetriol, glycerine | Merck, Germany |
| Accelerator | Phenolite TD 2131 | DIC Europe. Germany |
| Hardener | Beckopox SEH 2627 | Allnex, Belgien |
| Accelerator | Novares LS 500 | Rütgers Novares GmbH, Germany |

**Table 1:** Composition and bond strength at RT and 80°C of Reference Examples RE1-RE3 and Inventive Examples IE1-IE4

| **Filler name** | Millisil W3 | Millisil W6 | Millisil W12 | Sikron SF300 | Sikron SF500 | Sikron SF800 | Silmikron 795-10/1 |
|---|---|---|---|---|---|---|---|
| **$d_{50}$ [μm]** | 90 | 40 | 16 | 10 | 4 | 2 | 0.5 |
| | **RE1** | **RE2** | **RE3** | **IE1** | **IE2** | **IE3** | **IE4** |
| **Component (A)** | | | | | | | |
| BisA - Araldite GY 240 | 35.4 | 35.4 | 35.4 | 35.4 | 35.4 | 35.4 | 35.4 |
| BisF - Araldite GY 282 | 19.0 | 19.0 | 19.0 | 19.0 | 19.0 | 19.0 | 19.0 |
| BDDGE - Araldite DY-026 | 6.8 | 6.8 | 6.8 | 6.8 | 6.8 | 6.8 | 6.8 |
| TMPTGE - Araldite DY-T-CH | 6.8 | 6.8 | 6.8 | 6.8 | 6.8 | 6.8 | 6.8 |
| Filler | 29.3 | 29.3 | 29.3 | 29.3 | 29.3 | 29.3 | 29.3 |
| CabOSil TS 720 | 2.7 | 2.7 | 2.7 | 2.7 | 2.7 | 2.7 | 2.7 |
| **EEQ / [g/eq]** | 232.0 | 232.0 | 232.0 | 232.0 | 232.0 | 232.0 | 232.0 |
| **Component (B)** | | | | | | | |
| mXDA | 8.0 | 8.0 | 8.0 | 8.0 | 8.0 | 8.0 | 8.0 |
| Dytek A | 32.2 | 32.2 | 32.2 | 32.2 | 32.2 | 32.2 | 32.2 |
| Phenolite TD 2131 | 10.2 | 10.2 | 10.2 | 10.2 | 10.2 | 10.2 | 10.2 |
| Filler | 42.8 | 42.8 | 42.8 | 42.8 | 42.8 | 42.8 | 42.8 |
| CabOSil TS 720 | 4.4 | 4.4 | 4.4 | 4.4 | 4.4 | 4.4 | 4.4 |
| Ancamine K54 | 2.4 | 2.4 | 2.4 | 2.4 | 2.4 | 2.4 | 2.4 |
| **AHEQ [g/eq]** | 74.0 | 74.0 | 74.0 | 74.0 | 74.0 | 74.0 | 74.0 |
| | | | | | | | |
| **R1 [MPa]** | **33.1** | **33.8** | **34.1** | **34.5** | **35.3** | **35.4** | **35.7** |
| **Increase in Bond Strength at RT (ref. Millisil W3) [%]** | - | 2.1 | 3.0 | 4.2 | 6.8 | 7.1 | 7.8 |
| **B3 (80°C) [MPa]** | **17.6** | **20.7** | **21.1** | **21.8** | **23.7** | **24.4** | **24.3** |

(continued)

| Component (B) | | | | | | | |
|---|---|---|---|---|---|---|---|
| **Increase in Bond Strength at 80°C (ref. Millisil W3) [%]** | - | 17.6 | 19.9 | 23.9 | 34.7 | 38.8 | 38.2 |
| **Decrease in Bond strength at 80°C compared to RT [%]** | 47 | 39 | 38 | 37 | 33 | 31 | 32 |

The obtained results are shown in the attached Figure. As can be seen, the bond strength decreasing effect of higher temperatures is less pronounced when using fillers of lower median particle size $d_{50}$. Fine filler particles lead to higher loads especially at elevated temperatures, like 80°C. In addition, the decrease on bond strength due to elevated temperatures, a feature that is especially relevant in anchoring applications, is much lower when the median particle size $d_{50}$ of the filler is small. This observation becomes especially significant at $d_{50}$ median particle sizes of 15 μm or lower.

In order to check if this effect was visible for different hardeners and amine mixtures, three illustrative alternative hardeners were selected, namely:

- Mannich bases hardener (Beckopox SEH 2627 based on mXDA)
- Inorganic accelerator ($Ca(NO_3)_2$ solution in glycerin diluted in 1,3-BAC and IPDA)
- Styrenated Phenol accelerator (Novares LS 500 diluted in 1,3-BAC and mXDA)

**Table 2:** Composition and bond strength at RT and 80°C of Reference Examples RE4-RE6 and Inventive Examples IE5-IE9

| **Filler name** | Millisil W12 | Sikron SF50 0 | Silmikron 795-10/1 | Millisil W12 | Silmikron 795-10/1 | Millisil W12 | Sikron SF50 0 | Silmikron 795-10/1 |
|---|---|---|---|---|---|---|---|---|
| **$d_{50}$ [μm]** | 16 | 4 | 0.5 | 16 | 0.5 | 16 | 4 | 0.5 |
| | **RE4** | **IE5** | **IE6** | **RE5** | **IE7** | **RE6** | **IE8** | **IE9** |
| **Component (A)** | | | | | | | | |
| DGEBA - Araldite GY 240 | 36.3 | 36.3 | 36.3 | 36.3 | 36.3 | 36.3 | 36.3 | 36.3 |
| DGEBF - Araldite GY 282 | 19.5 | 19.5 | 19.5 | 19.5 | 19.5 | 19.5 | 19.5 | 19.5 |
| BDDGE - Araldite DY-026 | 7 | 7 | 7 | 7 | 7 | 7 | 7 | 7 |
| TMPTGE-Araldite DY-T-CH | 7 | 7 | 7 | 7 | 7 | 7 | 7 | 7 |
| Filler | 27.9 | 27.9 | 27.9 | 27.9 | 27.9 | 27.9 | 27.9 | 27.9 |
| CabOSil TS 720 | 2.3 | 2.3 | 2.3 | 2.3 | 2.3 | 2.3 | 2.3 | 2.3 |
| **EEQ [g/eq]** | 226 | 226 | 226 | 226 | 226 | 226 | 226 | 226 |
| **Component (B)** | | | | | | | | |
| $Ca(NO_3)_2$ (80% in glycerine) | 2.5 | 2.5 | 2.5 | 0 | 0 | 0 | 0 | 0 |
| Beckopox SEH 2627 | 0 | 0 | 0 | 58 | 58 | 0 | 0 | 0 |
| Novares LS 500 | 0 | 0 | 0 | 0 | 0 | 23.8 | 23.8 | 23.8 |
| mXDA | 0 | 0 | 0 | 0 | 0 | 25 | 25 | 25 |
| 1,3-BAC | 26.2 | 26.2 | 26.2 | 0 | 0 | 25 | 25 | 25 |

(continued)

| Component (B) | | | | | | | | |
|---|---|---|---|---|---|---|---|---|
| IPDA | 26.3 | 26.3 | 26.3 | 0 | 0 | 0 | 0 | 0 |
| Filler | 38.2 | 38.2 | 38.2 | 36.3 | 36.3 | 23.2 | 23.2 | 23.2 |
| Aerosil R805 | 6.8 | 6.8 | 6.8 | 0 | 0 | 0 | 0 | 0 |
| CabOSil TS 720 | 0 | 0 | 0 | 2.7 | 2.7 | 3 | 3 | 3 |
| Ancamine K54 | 0 | 0 | 0 | 3 | 3 | 0 | 0 | 0 |
| **AHEQ [g/eq]** | 74 | 74 | 74 | 91 | 91 | 70 | 70 | 70 |
| | | | | | | | | |
| **R1 [MPa]** | **35.8** | **36** | **36.2** | **38.5** | **38.1** | **35.6** | **33.7** | **35.3** |
| **Increase in Bond Strength at RT (ref. Millisil W12) [%]** | - | 1 | 1 | - | 0 | - | 0 | 0 |
| **B3_80°C [MPa]** | **27.7** | **28.7** | **29.1** | **25.4** | **26.1** | **23.7** | **24.7** | **24.8** |
| **Increase in Bond Strength at 80°C (ref. Millisil W12) [%]** | - | 4 | 5 | - | 3 | - | 4 | 5 |
| **Decrease in Bond strength at 80°C compared to RT [%]** | 23 | 20 | 20 | 34 | 31 | 33 | 27 | 30 |

Improvements in the B3 (80°C) results were observed when going from Millisil W12 to Sikron SF500 and Silmikron 795-10/1, i.e. when going from fillers with a median particle size $d_{50}$ of 16 $\mu$m to 4 $\mu$m and 0.5 $\mu$m, respectively.

Furthermore, in order to determine the concentration range of the amount of fine filler for obtaining higher loads at 80°C, a stepwise exchange of Millisil W12 by Sikron SF800 was made.

**Table 3:** Composition and bond strength at RT and 80°C of Reference Examples RE7 and RE8 and Inventive Examples IE10 and IE11

| % of finer filler | 0 | 20 | 80 | 100 |
|---|---|---|---|---|
| | **RE7** | **RE8** | **IE10** | **IE11** |
| **Component (A)** | | | | |
| BisA - Araldite GY 240 | 35.4 | 35.4 | 35.4 | 35.4 |
| BisF - Araldite GY 282 | 19.0 | 19.0 | 19.0 | 19.0 |
| BDDGE - Araldite DY-026 | 6.8 | 6.8 | 6.8 | 6.8 |
| TMPTGE - Araldite DY-T-CH | 6.8 | 6.8 | 6.8 | 6.8 |
| Millisil W12 | 29.3 | 23.4 | 5.9 | 0.0 |
| Sikron SF800 | 0.0 | 5.9 | 23.4 | 29.3 |
| CabOSil TS 720 | 2.7 | 2.7 | 2.7 | 2.7 |
| **EEQ [g/eq]** | 232.0 | 232.0 | 232.0 | 232.0 |
| **Component (B)** | | | | |
| mXDA | 8.0 | 8.0 | 8.0 | 8.0 |
| Dytek A | 32.2 | 32.2 | 32.2 | 32.2 |
| Phenolite TD 2131 | 10.2 | 10.2 | 10.2 | 10.2 |
| Millisil W12 | 42.8 | 34.2 | 8.6 | 0.0 |

(continued)

| Component (B) | | | | |
|---|---|---|---|---|
| Sikron SF800 | 0.0 | 8.6 | 34.2 | 42.8 |
| CabOSil TS 720 | 4.4 | 4.4 | 4.4 | 4.4 |
| Ancamine K54 | 2.4 | 2.4 | 2.4 | 2.4 |
| **AHEQ [g/eq]** | 74.0 | 74.0 | 74.0 | 74.0 |
| | | | | |
| **R1 [MPa]** | **35.2** | **36.1** | **36.5** | **37.3** |
| **Increase in Bond Strength at RT (ref Millisil W12) [%]** | - | 2.4 | 3.6 | 5.9 |
| **B3_80°C [MPa]** | **17.5** | **17.8** | **19.2** | **20.1** |
| **Increase in Bond Strength at 80°C (ref Millisil W12) [%]** | - | 1.6 | 9.7 | 14.8 |
| **Decrease in Bond strength at 80°C compared to RT [%]** | 50 | 51 | 47 | 46 |

Some kind of increase in bond strength at RT and 80°C was observed in every step but in order to have a significant improvement, the filler has to be composed of at least 75 wt.-% of fine filler (F) with a smaller median particle size $d_{50}$.

Furthermore, the effect of the presence of adhesion promoters like GlyMo and AMEO was evaluated.

**Table 4:** Composition and bond strength at RT and 80°C of Reference Examples RE9 and RE10 and Inventive Examples IE12 and IE13

| **Silane** | No | No | Yes | Yes |
|---|---|---|---|---|
| **Filler name** | Millisil W12 | Sikron SF800 | Millisil W12 | Sikron SF800 |
| **$d_{50}$ [μm]** | 16 | 2 | 16 | 2 |
| | **RE9** | **IE12** | **RE10** | **IE13** |
| **Component (A)** | | | | |
| DGEBA - Araldite GY 240 | 35.4 | 35.4 | 35.4 | 35.4 |
| DGEBF - Araldite GY 282 | 19 | 19 | 19 | 19 |
| BDDGE - Araldite DY-026 | 6.8 | 6.8 | 6.8 | 6.8 |
| TMPTGE - Araldite DY-T-CH | 6.8 | 6.8 | 6.8 | 6.8 |
| Glymo | 0 | 0 | 3.3 | 3.3 |
| Millisil W12 | 29.3 | 0 | 26 | 0 |
| Sikron SF 800 | 0 | 29.3 | 0 | 26 |
| CabOSil TS 720 | 2.7 | 2.7 | 2.7 | 2.7 |
| **EEQ [g/eq]** | 232 | 232 | 225 | 225 |
| **Component (B)** | | | | |
| mXDA | 8 | 8 | 8 | 8 |
| Dytek A | 32.2 | 32.2 | 32.2 | 32.2 |
| Phenolite TD 2131 | 10.2 | 10.2 | 10.2 | 10.2 |
| Ameo | 0 | 0 | 2.8 | 2.8 |
| Millisil W12 | 42.8 | 0 | 40 | 0 |

(continued)

| Component (B) | | | | |
|---|---|---|---|---|
| Sikron SF 800 | 0 | 42.8 | 0 | 40 |
| CabOSil TS 720 | 4.4 | 4.4 | 4.4 | 4.4 |
| Ancamine K54 | 2.4 | 2.4 | 2.4 | 2.4 |
| **AHEQ [g/eq]** | 74 | 74 | 73 | 73 |
| **R1 [MPa]** | **34.3** | **35.8** | **36.7** | **35.8** |
| **Increase in Bond Strength at RT (ref Millisil W12) [%]** | - | 4 | - | 0 |
| **B3_80°C [MPa]** | **22.6** | **25.7** | **19.5** | **25.6** |
| **Increase in Bond Strength at 80°C (ref Millisil W12) [%]** | - | 14 | - | 31 |
| **Decrease in Bond strength at 80°C compared to RT [%]** | 34 | 28 | 47 | 28 |

The same effect as in the absence of adhesion promoters was observed. Thus, the present invention is feasible in the absence as well as the presence of adhesion promoters such as silanes.

Moreover, fillers of different chemical composition were evaluated. That is to say, a selection of different fillers having a $d_{50}$ median particle size below 1 $\mu$m were tested and compared to Millisil W12.

**Table 5:** Composition and bond strength at RT and 80°C of Reference Example RE11 and Inventive Examples IE14-IE18

| **Filler name** | Millisil W12 | RG400 0 | Silmikron 795-10/1 | Silmikron 810-10/1 | Silmikron 805-10/1 | Silmikron 1171-850 |
|---|---|---|---|---|---|---|
| **$d_{50}$ [$\mu$m]** | 16 | 0.6 | 0.5 | 0.5 | 0.5 | 0.3 |
| **Chemical composition** | 99% $SiO_2$ | 99.8% $Al_2O_3$ | 98% $SiO_2$ | 99% $SiO_2$ | 99% $SiO_2$ | 99.9% $SiO_2$ |
| | 0.3% $Al_2O_3$ | 0.08% $Na_2O$ | 1% $Al_2O_3$ | 0.2% $Al_2O_3$ | 0.3% $Al_2O_3$ | |
| | 0.05% $Fe_2O_3$ | 0.02% $Fe_2O_3$ | 0.05% $Fe_2O_3$ | 0.05% $Fe_2O_3$ | 0.05% $Fe_2O_3$ | |
| | 0.1% CaO+MgO | 0.03% $SiO_2$ | 0.05% CaO+MgO | 0.4% CaO+MgO | 0.1% CaO+MgO | |
| | 0.2% $Na_2O$+$K_2O$ | 0.03% CaO | 0.5% $ZrO_2$ | 0.2% $ZrO_2$ | 0.2% $ZrO_2$ | |
| | | | 0.05% $Na_2O$+$K_2O$ | 0.05% $Na_2O$+$K_2O$ | 0.3% $Na_2O$+$K_2O$ | |
| Mohs Hardness | 7 | 9 | 7 | 6 | 6.5 | 7 |
| | **RE11** | **IE14** | **IE15** | **IE16** | **IE17** | **IE18** |
| **Component (A)** | | | | | | |
| BisA - Araldite GY 240 | 35.4 | 35.4 | 35.4 | 35.4 | 35.4 | 35.4 |
| BisF - Araldite GY 282 | 19.0 | 19.0 | 19.0 | 19.0 | 19.0 | 19.0 |
| BDDGE - Araldite DY-026 | 6.8 | 6.8 | 6.8 | 6.8 | 6.8 | 6.8 |
| TMPTGE - Araldite DY-T-CH | 6.8 | 6.8 | 6.8 | 6.8 | 6.8 | 6.8 |

(continued)

| | RE11 | IE14 | IE15 | IE16 | IE17 | IE18 |
|---|---|---|---|---|---|---|
| **Component (A)** | | | | | | |
| Filler | 29.3 | 29.3 | 29.3 | 29.3 | 29.3 | 29.3 |
| CabOSil TS 720 | 2.7 | 2.7 | 2.7 | 2.7 | 2.7 | 2.7 |
| **EEQ [g/eq]** | 232.0 | 232.0 | 232.0 | 232.0 | 232.0 | 232.0 |
| **Component (B)** | | | | | | |
| mXDA | 8.0 | 8.0 | 8.0 | 8.0 | 8.0 | 8.0 |
| Dytek A | 32.2 | 32.2 | 32.2 | 32.2 | 32.2 | 32.2 |
| Phenolite TD 2131 | 10.2 | 10.2 | 10.2 | 10.2 | 10.2 | 10.2 |
| Filler | 42.8 | 42.8 | 42.8 | 42.8 | 42.8 | 42.8 |
| CabOSil TS 720 | 4.4 | 4.4 | 4.4 | 4.4 | 4.4 | 4.4 |
| Ancamine K54 | 2.4 | 2.4 | 2.4 | 2.4 | 2.4 | 2.4 |
| **AHEQ [g/eq]** | 74.0 | 74.0 | 74.0 | 74.0 | 74.0 | 74.0 |
| | | | | | | |
| **R1 [MPa]** | **35.5** | **35.5** | **37.1** | **35.1** | **37.1** | **35.5** |
| **Increase in Bond Strength at RT (ref. Millisil W12) [%]** | - | 0 | 5 | 0 | 5 | 0 |
| **B3_80°C [MPa]** | **17.2** | **19.0** | **21.6** | **20.3** | **21.6** | **22.1** |
| **Increase in Bond Strength at 80°C (ref. Millisil W12) [%]** | - | 11 | 26 | 18 | 26 | 29 |
| **Decrease in Bond strength at 80°C compared to RT [%]** | 52 | 47 | 42 | 42 | 42 | 38 |

Higher bond strength specially at elevated temperatures can be obtained in accordance with the present invention with different types of fine filler (F) including e.g. $SiO_2$ based filler or $Al_2O_3$ based filler.

## Claims

1. A multi-component epoxy resin material, comprising:

   an epoxy resin component (A) comprising at least one hardenable epoxy resin, and
   a hardener component (B) comprising a hardening agent for the epoxy resin of component (A),
   wherein the multi-component epoxy resin material further comprises at least one filler selected from oxides of silicon and aluminium, or mixed oxides in the presence of further cations, wherein the total amount of filler in the multi-component epoxy resin material is 55 wt.-% or less, based on the total weight of the multi-component epoxy resin material, and
   wherein at least 75 wt.-% of the filler, based on the total weight of filler in the multi-component epoxy resin material, are composed of at least one filler (F) having a median particle size $d_{50}$ of 15 $\mu$m or less.

2. The multi-component epoxy resin material according to claim 1, wherein the total amount of filler in the multi-component epoxy resin material is 20 to 40 wt.-%, based on the total weight of the multi-component epoxy resin material.

3. The multi-component epoxy resin material according to claim 2, wherein the total amount of filler in the multi-component epoxy resin material is 25 to 35 wt.-%, based on the total weight of the multi-component epoxy resin material.

4. The multi-component epoxy resin material according to any one of claims 1 to 3, wherein the amount of filler (F) having a median particle size $d_{50}$ of 15 $\mu$m or less in component (B) is at least 37 wt.-%, based on the total weight of component (B).

5. The multi-component epoxy resin material according to claim 4, wherein the amount of filler (F) having a median particle size $d_{50}$ of 15 $\mu$m or less in component (B) is at least 40 wt.-%, based on the total weight of component (B).

6. The multi-component epoxy resin material according to claim 5, wherein the amount of filler (F) having a median particle size $d_{50}$ of 15 $\mu$m or less in component (B) is 40 to 55 wt.-%, based on the total weight of component (B).

7. The multi-component epoxy resin material according to any one of claims 1 to 6, wherein the amount of filler (F) having a median particle size $d_{50}$ of 15 $\mu$m or less in component (A) is 15 to 35 wt.-%, based on the total weight of component (A).

8. The multi-component epoxy resin material according to claim 7, wherein the amount of filler (F) having a median particle size $d_{50}$ of 15 $\mu$m or less in component (A) is 20 to 30 wt.-%, based on the total weight of component (A).

9. The multi-component epoxy resin material according to any one of claims 1 to 8, wherein the at least one filler (F) has a median particle size $d_{50}$ of 10 $\mu$m or less.

10. The multi-component epoxy resin material according to claim 9, wherein the at least one filler (F) has a median particle size $d_{50}$ of 5 $\mu$m or less.

11. The multi-component epoxy resin material according to claim 10, wherein the at least one filler (F) has a median particle size $d_{50}$ of 4 $\mu$m or less.

12. The multi-component epoxy resin material according to any one of claims 1 to 11 in the form of a two-component system consisting of components (A) and (B).

13. Use of the multi-component epoxy resin material according to any one of claims 1 to 12 for fixing anchoring elements in a hole or crevice in a building substrate.

14. A method of fixing an anchoring element in a hole or crevice in a building substrate, comprising introducing the multi-component epoxy resin material according to any one of claims 1 to 12 and an anchoring element into the hole or crevice, and allowing the multi-component epoxy resin material to cure.

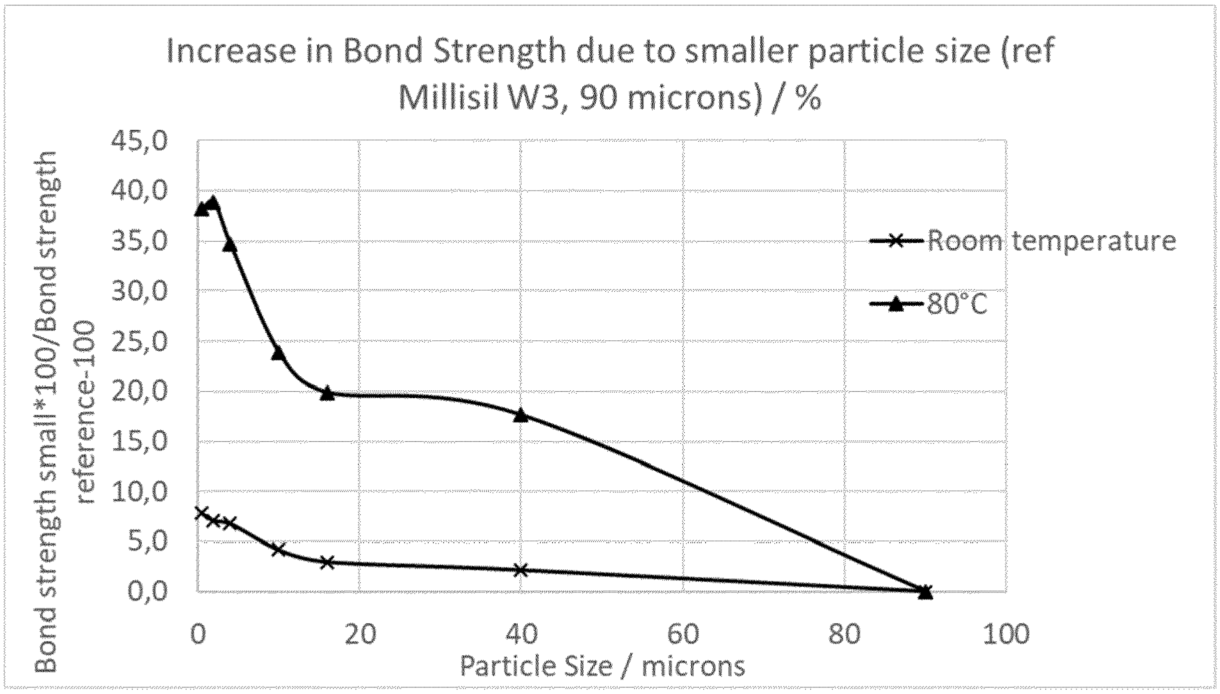
Increase in Bond Strength due to smaller particle size (ref Millisil W3, 90 microns) / %
Bond strength small*100/Bond strength reference-100
45,0
40,0
35,0
30,0
25,0
20,0
15,0
10,0
5,0
0,0
0
20
40
60
80
100
Particle Size / microns
Room temperature
80°C

Europäisches Patentamt
European Patent Office
Office européen des brevets

# EUROPEAN SEARCH REPORT

Application Number
EP 21 16 8776

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2016/083563 A1 (GRUN JURGEN [DE] ET AL) 24 March 2016 (2016-03-24)<br>* example 3 *<br>* claims 13,14 * | 1-14 | INV.<br>C04B26/14<br>C08L63/00 |
| X | BASHIR MUHAMMAD AHSAN ET AL: "The Effect of Extender Particle Size on the Glass Transition Temperature of Model Epoxy Coatings",<br>POLYMERS,<br>vol. 12, no. 1,<br>12 January 2020 (2020-01-12), page 196,<br>XP055871130,<br>DOI: 10.3390/polym12010196<br>* figures 2-8; tables 1, 2, 3 * | 1-14 | |
| A | EP 3 733 731 A1 (HILTI AG [LI])<br>4 November 2020 (2020-11-04)<br>* tables 1-5 * | 1-14 | |

| TECHNICAL FIELDS SEARCHED (IPC) |
|---|
| C08K |
| C08L |
| C09D |
| C09J |
| C04B |

2

The present search report has been drawn up for all claims

| Place of search | Date of completion of the search | Examiner |
|---|---|---|
| The Hague | 9 December 2021 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 16 8776

This annex lists the patent family members relating to the patent documents cited in the above-mentioned European search report. The members are as contained in the European Patent Office EDP file on
The European Patent Office is in no way liable for these particulars which are merely given for the purpose of information.

09-12-2021

| Patent document cited in search report | Publication date | Patent family member(s) | Publication date |
|---|---|---|---|
| US 2016083563 A1 | 24-03-2016 | CN 105440658 A | 30-03-2016 |
| | | CN 113603393 A | 05-11-2021 |
| | | DE 102015113352 A1 | 24-03-2016 |
| | | DE 202015009664 U1 | 06-12-2018 |
| | | DE 202015009665 U1 | 06-12-2018 |
| | | EP 3000792 A1 | 30-03-2016 |
| | | EP 3835280 A1 | 16-06-2021 |
| | | ES 2881284 T3 | 29-11-2021 |
| | | JP 6579880 B2 | 25-09-2019 |
| | | JP 2016069270 A | 09-05-2016 |
| | | PL 3000792 T3 | 02-11-2021 |
| | | US 2016083563 A1 | 24-03-2016 |
| | | US 2020299486 A1 | 24-09-2020 |
| EP 3733731 A1 | 04-11-2020 | AU 2020264706 A1 | 30-09-2021 |
| | | CA 3132925 A1 | 05-11-2020 |
| | | CN 113631624 A | 09-11-2021 |
| | | EP 3733731 A1 | 04-11-2020 |
| | | WO 2020221608 A1 | 05-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016083563 A


### Non-patent literature cited in the description


- **R. A. COOK ; R. C. KONZ.** Factors Influencing Bond Strength of Adhesive Anchors. *ACI Structural Journal,* 2001, vol. 98, 76-86
- **M. LAHOUAR ; J.-F. CARON ; N. PINOTEAU ; G. FORÊT ; K. BENZARTI.** Mechanical behavior of adhesive anchors under high temperature exposure: experimental investigation. *International Journal of Adhesion and Adhesives,* 2017, vol. 78, 200-211
- **A. D. MCNAUGHT ; A. WILKINSON.** IUPAC Compendium of Chemical Terminology. Blackwell Scientific Publications, 1997
- **MICHAEL DORNBUSCH ; ULRICH CHRIST ; ROB RASING.** Epoxy Resins. Vincentz Network GmbH & Co KG, 2015
- **LEE H ; NEVILLE K.** Handbook of Epoxy Resins. McGraw-Hill, 1982
- *CHEMICAL ABSTRACTS,* 61788-44-1